## Europäisches Patentamt
## European Patent Office
## Office européen des brevets

(19)

(11) Veröffentlichungsnummer: **0 119 481 B1**

(12) **EUROPÄISCHE PATENTSCHRIFT**

(45) Veröffentlichungstag der Patentschrift:
11.06.86

(51) Int. Cl.⁴: **C 10 B 41/00, C 10 B 21/10**

(21) Anmeldenummer: 84101631.4

(22) Anmeldetag: 17.02.84

(54) Verfahren zur Überwachung der Umstelleinrichtungen an Verkokungsofenbatterien.

(30) Priorität: 19.02.83 DE 3305871

(43) Veröffentlichungstag der Anmeldung:
26.09.84 Patentblatt 84/39

(45) Bekanntmachung des Hinweises auf die Patenterteilung:
11.06.86 Patentblatt 86/24

(84) Benannte Vertragsstaaten:
BE FR GB IT NL

(56) Entgegenhaltungen:
DE - B - 2 105 603
FR - A - 1 026 233

(73) Patentinhaber: Carl Still GmbH & Co. KG,
Kaiserwall 17-23, D-4350 Recklinghausen (DE)

(72) Erfinder: Stalherm, Dieter, Dr., Ahornstrasse 8,
D-4350 Recklinghausen (DE)
Erfinder: Haack, Reimer, Schützenstrasse 26,
D-4358 Haltern-Lavesum (DE)
Erfinder: Lemke, Otto, Westerholter Weg 70,
D-4350 Recklinghausen (DE)

(74) Vertreter: Dahlkamp, Heinrich-Leo, Dipl.-Ing., c/o Firma
Carl Still GmbH & Co. KG Kaiserwall 17 - 23,
D-4350 Recklinghausen (DE)

**Beschreibung**

Die Erfindung betrifft ein Verfahren zur Überwachung der Umstelleinrichtungen an Verkokungsofenbatterien. An Verkokungsofenbatterien werden die Umstellarmaturen (Gashähne, Abhitzeventile und Luftklappen) üblicherweise mittels einer hydraulischen Umstelleinrichtung betätigt. Dabei sind Gashähne, Luftklappen und Abhitzeteller eines jeden Verkokungsofens jeweils an einem sich über die gesamte Länge der Verkokungsofenbatterie erstreckenden Gestänge befestigt. Die Gashähne sind dabei üblicherweise über Hahnschlüssel an ihr Gestänge angekoppelt, die Luftklappen und Abhitzeventile jeweils über Ketten. Die Gestänge werden nach einer Steuerung über hydraulische Zylinder eingefahren und sorgen auf diese Weise für den regenerativen Beheizungswechsel an den Verkokungsöfen.

An dieser Umstelleinrichtung werden die Gestänge normalerweise über Endschalter auf ihre richtige Stellung hin oder einen eventuellen Gestängebruch und die Hydraulik auf den notwendigen Öldruck hin überwacht. Dabei ist also nur eine Überwachung des Gestänges einer Verkokungsofenbatterie insgesamt möglich. Normalerweise nicht überwacht werden der Bruch einzelner Ketten oder Hahnschlüssel.

Es gibt zwar Vorschläge, diese Überwachung
- mit Licht- oder Laserschranken bzw.
- mit sogenannten Leiterschleifen, die über Büschelstecker zusammengesteckt sind und von einem Relais auf Unterbrechung überwacht werden,
durchzuführen.

Bei den Licht- und Laserschranken macht jedoch der erforderliche Explosionsschutz beim Einsatz im Meistergang von Verkokungsofenbatterien die Geräte sehr teuer und schwer handhabbar. Außerdem gibt es bei langen Batterien erhebliche Schwierigkeiten mit der Ausrichtung derartiger Schranken, da bekanntermaßen eine Verkokungsofenbatterie "arbeitet", d. h. aufgrund von Temperaturschwankungen und von Kräften, die von der Koksausdrückmaschine auf das Mauerwerk wirken, kann es zu kleineren Verschiebungen im Meistergang kommen, die bereits bei derartigen Licht- und Laserschranken zu Problemen führen können.

Bei der gesteckten Leiterschleife treten sehr leicht Kontaktschwierigkeiten wegen der stark korrosiven Atmosphäre auf, zumal die Schleife wegen des Ex-Schutzes im eigensicheren Bereich betrieben werden muß. Außerdem behindern die vielen herumhängenden Drähte im Meistergang die Wartung der Umstellgestänge und Armaturen.

Die der vorliegenden Erfindung zugrundeliegende Aufgabe besteht darin, ein System zur Überwachung der Umstelleinrichtungen, insbesondere zur Einzelüberwachung der Luftklappen, Abhitzeteller und Gashähne, an den einzelnen Verkokungsöfen anzugeben, welches auf einfache und betriebssichere Weise arbeitet und für alle Arten von Verkokungsofenbatterien benutzt werden kann.

Diese Aufgabe wird erfindungsgemäß durch das Kennzeichen des Hauptanspruches gelöst.

Die Abhitzeventile einer Verkokungsofenbatterie haben im allgemeinen die Aufgabe, im regenerativen Wechsel dem Ofen Luft bzw. Schwachgas zuzuführen oder Abgas aus dem Ofen abzuführen. Die Luftklappen, Gashähne und Abhitzeteller befinden sich also immer abwechselnd in einer offenen oder geschlossenen Stellung. Den einzelnen Medien sind dabei relativ genau angebbare Temperaturen zuzuordnen. Für den normalen Betriebsfall kann man bei der einströmenden Verbrennungsluft und dem zuzuführenden Schwachgas von Temperaturen unterhalb von 100 °C und bei dem ausströmenden Abgas von einer Temperatur über 200 °C ausgehen.

Erfindungsgemäß können nun Sollwerte eingestellt werden, die in diesen Bereichen liegen. Unzulässige Abweichungen von diesen Sollwerten lägen beispielsweise dann vor, wenn für die einströmende Luft oder das zuzuführende Schwachgas dieser Sollwert nicht unterschritten würde oder wenn für das Ausströmen der Abgase der bestimmte Sollwert nicht überschritten würde. Man kann nun mittels geeigneter Meßgeräte, wie z. B. Thermoelemente, Widerstands-Thermometer, Kontaktthermometer, Temperaturschalter oder ähnlichen, die Temperatur im Abhitzeventil messen und diese Meßsignale an eine zentrale Meßwarte übertragen und dort registrieren und mit den der Stellung der Umstelleinrichtung entsprechenden Sollwerten vergleichen. Bei unzulässigen Abweichungen vom Sollwert würde dann automatisch ein Alarmsignal ausgelöst und die erforderlichen Sicherheitsmaßnahmen, z. B. die automatische Betätigung der Gasmangelsicherung, veranlaßt.

Insbesondere bei kombinierten Luft-Abhitzeventilen bzw. Schwachgas-Abhitzeventilen kann man nun erfindungsgemäß in jedem Abhitzeventil die Temperatur von Verbrennungsluft und Abhitze bzw. Schwachgas und Abhitze mit nur einer Temperaturmeßstelle messen. Zur Überwachung von jeweils zwei Elementen, z. B. Luftklappe und Abhitzeteller bzw. Schwachgashahn und Abhitzeteller, genügt also jeweils nur eine Überwachung. Selbstverständlich kann die Erfindung auch auf Systeme angewendet werden, bei denen Luft- bzw. Gaszufuhr und Abhitzeabfuhr durch getrennte Einrichtungen erfolgt.

Ein zusätzlicher Vorteil des erfindungsgemäßen Verfahrens ist es, daß man mit diesen kontinuierlichen Temperaturmessungen Rückschlüsse auf den Beheizungszustand einzelner Heizwände erzielen kann.

Zur Überwachung der Starkgaszufuhr bei kopfbeheizten Öfen sieht die Erfindung außerdem vor, daß die Temperatur des Starkgases an der Zuführungsseite in jedem Starkgaskanal gemessen wird. Auch hier kann man wiederum davon ausgehen, daß das Starkgas eine Temperatur hat, die auf jeden Fall beispielsweise unter 100 °C liegt. Wenn also die Temperatur im Starkgaskanal eine bestimmte Zeit nach der Umstellung auf Starkgaszuführung den Sollwert nicht unterschritten hat, wird das Alarmsignal ausgelöst.

Man kann aber auch erfindungsgemäß zur Überwachung der Starkgas- und/oder Schwachgasumstellhähne in den Einzelzuführungen, vorzugsweise zwischen Verteilleitung und den Umstellhähnen, Strömungsmeßeinrichtungen anbringen, mit denen festgestellt wird, ob das Gas strömt oder nicht. Auch das daraus resultierende Signal kann dann in ähnlicher weise wie vorher in Verbindung mit dem von dem Umstellzustand her vorbestimmten Sollwert ausgewertet werden.

Sowohl bei der Temperaturmeßüberwachung als auch bei der Strömungsmeßüberwachung der Umstelleinrichtung handelt es sich um einfache und betriebssichere Einrichtungen, die auch mit relativ geringem Kostenaufwand installiert werden können. Verschmutzungen und die vorher erwähnte Bewegung des Koksofenmauerwerkes haben keinen Einfluß auf diese Meßmethoden. Die einzusetzenden Meßgeräte zeichnen sich durch lange Lebensdauer und Wartungsfreiheit aus.

Die Erfindung sieht weiterhin ein Verfahren zur Überwachung der Umstelleinrichtungen an Verkokungsofenbatterien vor, wie es im Kennzeichen des Anspruches 5 erwähnt ist. Hierzu werden geeignete Druckmeßeinrichtungen, z. B. Kontaktmanometer, elektrische Druckaufnehmer oder Druckschalter, in die Ölzuführungsleitung zum Arbeitszylinder eingebaut. Bei Überschreiten eines Druckes, der entsprechend der Bruchlast der Hahnschlüssel einstellbar ist, wird wieder entsprechend dem Umstellrhythmus ein Alarmsignal gegeben bzw. der Umstellvorgang abgebrochen. Diese Art der Überwachung bietet insbesondere den Vorteil, daß bereits ein Alarmsignal ausgelöst werden kann, bevor ein Bruch am Hahnschlüssel erfolgt. Längere Reparaturen können also insoweit entfallen. Schließlich ist es erfindungsgemäß möglich, alle Überwachungseinrichtung selbstüberwachend auszuführen, d. h. bei Ausfall einer Meßstelle erfolgt automatisch eine Störmeldung.

Die Erfindung wird anhand der nachfolgenden Ausführungsbeispiele näher erläutert.

Überwachung des Hydraulikdrucks:

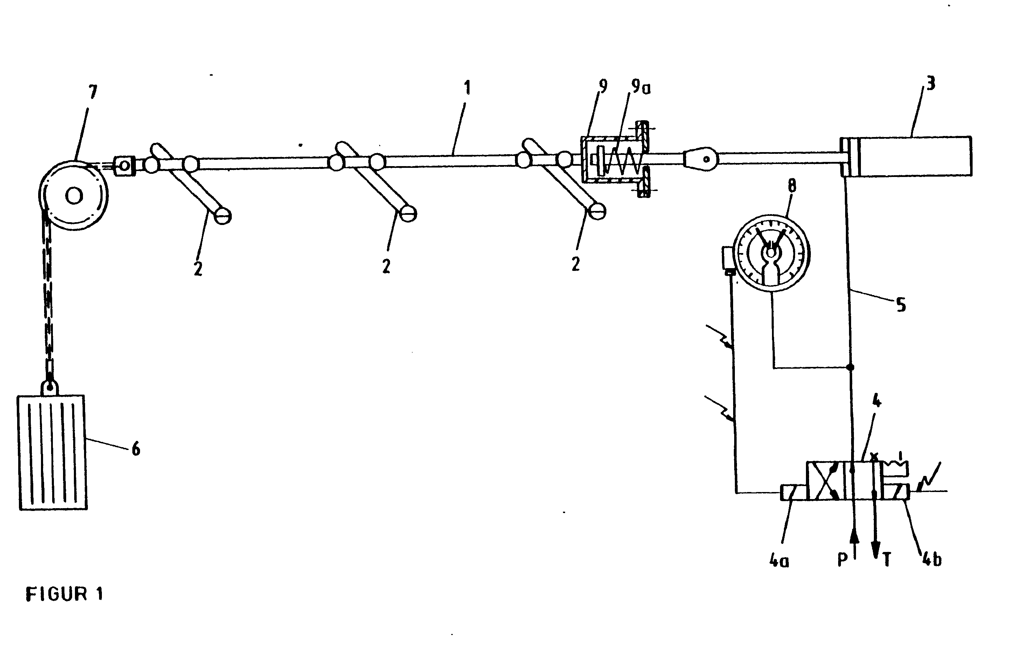

In Figur 1 ist schematisch ein Gestänge zur Betätigung der Gasumstellhähne dargestellt.

Das Gestänge 1 wird zum Öffnen der Gasumstellhähne, dargestellt durch die Hahnschlüssel 2, durch den Hydraulikzylinder 3 nach rechts bewegt. Zu diesem Zweck wird dem Zylinder 3 über das Magnetventil 4 durch Erregung des Magneten 4 b über die Leitung 5 Druckflüssigkeit zugeführt.

Zum Schließen der Gasumstellhähne wird das Gestänge 1 nach links bewegt. Dazu wird das Magnetventil 4 von der elektrischen Steuereinrichtung durch Erregung des Magneten 4 a umgesteuert und die Druckflüssigkeit aus dem Zylinder 3 über die Leitung 5 in den Tank entleert. Das Gegengewicht 6 kann jetzt über die Umlenkrolle 7 das Gestänge 1 zum Schließen der Gasumstellhähne wieder nach links bewegen.

Sollte durch Hängenbleiben eines Gasumstellhahnes der am Kontaktmanometer 8 eingestellte normale Flüssigkeitsdruck zum Öffnen der Gasumstellhähneeinen bestimmten, höher eingestellten Druck erreichen, so wird durch das Kontaktmanometer 8 ein elektrischer Impuls auf den Magneten 4 a gegeben, der das Magnetventil 4 umsteuert und damit die am Zylinder anstehende Druckflüssigkeit in den Tank entleert.

Um die Trägheit des hydraulischmechanischen Systems in einem solchen Störfall auszugleichen und damit ein Brechen des Hahnschlüssels 2 bzw. ein Abreißen des Gasumstellhahnes auszuschließen, ist ein Federpuffer 9 vorgesehen. Die Feder 9 a wird bis auf den am Kontaktmanometer 8 eingestellten Auslösedruck vorgespannt, so daß im Normalbetrieb keine Bewegung im Puffer 9 erfolgen kann.

Sollte ein Hängenbleiben eines Gasumstellhahnes beim Schließen auftreten, so bleibt das Gestänge stehen, da das Gegengewicht nur so bemessen ist, daß es nicht zum Bruch eines Hahnschlüssels bzw. zum Abreißen eines Umstellhahnes kommen kann. Der Umstellgang wird unterbrochen, die üblicherweise vorhandenen Endschalter können nicht ansprechen, wodurch z. B. die Gasmangelsicherung ausgelöst wird.

Anwendung von Temperaturmessungen (bei Strömungsmessungen ist das Verfahren sinngemäß):

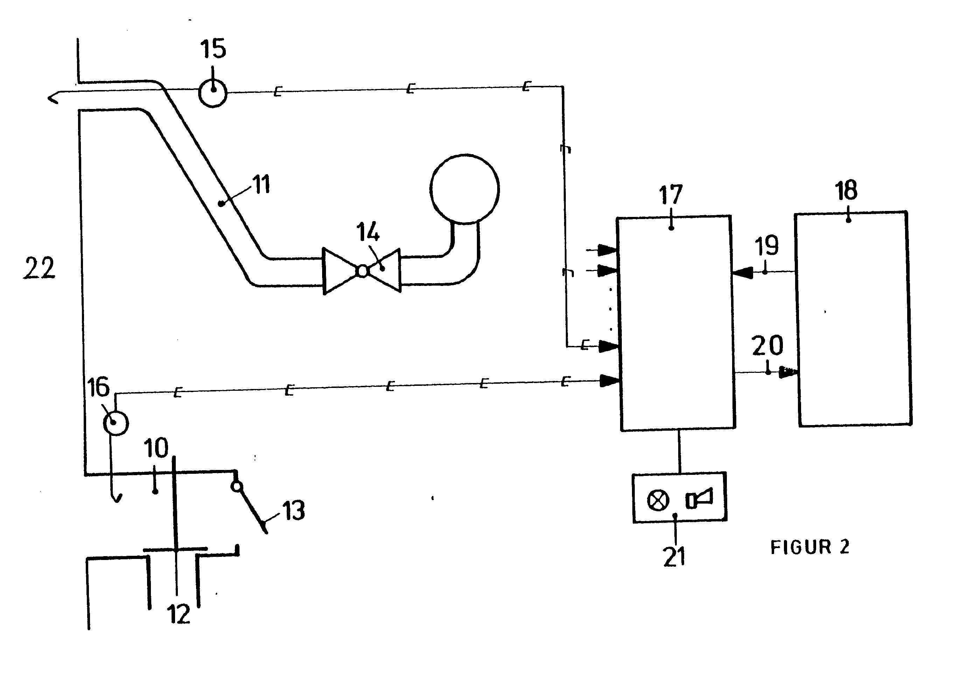

In Figur 2 sind schematisch ein Abhitzeventil 10 und eine Starkgaszuführung 11 im Fall eines kopfbeheizten Koksofens (22) dargestellt. Je nach Beheizungsphase ist in dem Ventil 10 der Abhitzeteller 12 geschlossen und die Luftklappe 13 geöffnet oder genau entgegengesetzt. Entsprechend ist der Starkgasumstellhahn 14 geöffnet und führt Starkgas oder er ist geschlossen und führt Degraphitierungsluft. Die Temperaturmeßfühler, z. B. Thermoelemente, 15 und 16 messen kontinuierlich die Temperaturen am Eintritt Starkgaskanal bzw. im Abhitzeventil. Wird Starkgas zugeführt, zeigt das Thermoelement 15 eine signifikant niedrigere Temperatur an, als wenn in wesentlich geringerer Menge Degraphitierungsluft zugeführt wird. Ist am Abhitzeventil 10 die Luftklappe 13 geöffnet, zeigt Thermoelement 18 eine Temperatur unter 100 °C an, ist der Abhitzeteller 12 geöffnet, eine solche von über 200 °C. Ein Umstellvorgang läuft nun z. B. folgendermaßen ab, wobei bei einer Koksofenbatterie die Hälfte der Armaturen in dem einen und die andere Hälfte in dem anderen Zustand jeweils ist.

Die geöffneten Starkgashähne schließen. Die Thermoelemente 15 steigen bei ordnungsgemäßem Schließen kurzfristig deutlich in ihrer Temperatur. Dies wird im Meßwerterfassungssystem 17 registriert und der Umstellvorgang kann weiter ablaufen. Die Abhitzeteller 12 und die Luftklappen 13 öffnen bzw. schließen, je nach Ausgangsstellung. Die Thermoelemente 16 steigen bzw. fallen sprunghaft in ihrer Temperatur. Ist dies im Einklang mit Sollwerten, kann der Umstellvorgang weitergehen. Die Hälfte der Umstellhähne 14 öffnet, die Temperatur der Thermoelemente 15 fällt, wenn die Öffnung richtig erfolgt. Die Beheizungsphase startet und wird kontinuierlich weiter überwacht bis zum nächsten Umstellvorgang. Tritt an irgendeiner Stelle eine Abweichung ein, erfolgt Alarm 21, und es wird eine Sicherheitsstellung 20 eingeleitet. Die Auswertung der Meßwerte und Sollwertvorgabe erfolgt über ein Meßwerterfassungssystem 17, das die entsprechenden Steuerbefehle 19 vom Steuerwerk 18 der Umstelleinrichtung erhält.

3. Verfahren nach Anspruch 1, dadurch gekennzeichnet, daß bei kopfbeheizten Koksöfen die Temperatur des Starkgases an der Zuführungsseite in jedem Starkgaskanal gemessen wird.

4. Verfahren nach Anspruch 1, dadurch gekennzeichnet, daß zur Überwachung der Starkgas- und/oder Schwachgasumstellhähne in den Einzelzuführungen, vorzugsweise zwischen Verteilleitung und den Umstellhähnen, Strömungsmeßeinrichtungen angebracht sind, mit denen festgestellt wird, ob das Gas strömt oder nicht.

5. Verfahren zur Überwachung der Umstelleinrichtungen an Verkokungsofenbatterien, dadurch gekennzeichnet, daß der Flüssigkeitsdruck in den Zuführungsleitungen zu den Hydraulikzylindern, mit denen die einzelnen Umstellgestänge bewegt werden, gemessen werden, zentral registriert, mit den der Stellung der Umstelleinrichtung entsprechenden Sollwerten verglichen und bei unzulässigen Abweichungen vom Sollwert automatisch Signale zur Durchführung erforderlicher Sicherheitsmaßnahmen ausgelöst werden.

6. Verfahren nach den vorhergehenden Ansprüchen, dadurch gekennzeichnet, daß bei Ausfall einer Meßstelle automatisch eine Störmeldung erfolgt.

## Patentansprüche

1. Verfahren zur Überwachung der Umstelleinrichtungen an Verkokungsofenbatterien, dadurch gekennzeichnet, daß an jedem einzelnen Verkokungsofen einer Batterie die Temperaturen und/ oder die Strömungsgeschwindigkeiten der in den Verkokungsofen ein- und ausströmenden Medien Verbrennungsluft, Gas und Abhitze gemessen, zentral registriert, mit den der Stellung der Umstelleinrichtung entsprechenden Sollwerten verglichen und bei unzulässigen Abweichungen vom Sollwert automatisch Signale zur Durchführung erforderlicher Sicherheitsmaßnahmen, z. B. automatische Betätigung der Gasmangelsicherung, ausgelöst werden.

2. Verfahren nach Anspruch 1, dadurch gekennzeichnet, daß bei kombinierten Luft-Abhitzeventilen bzw. Schwachgas-Abhitzeventilen in jedem Abhitzeventil die Temperatur von Verbrennungsluft und Abhitze bzw. Schwachgas und Abhitze mit nur einer Temperaturmeßstelle gemessen wird.

## Claims

1. Process developed to monitor and supervise reversing devices installed on coking plants, characterized in that at each single coke oven of a coke oven battery the temperatures and/or flow velocities of combustion air, gas and waste heat flowing in and out from coke ovens are centrally registered, compared with the design values reflecting the reversing device position, and that in case of nonpermissible deviations from said design value, signals are automatically triggered to take required safety action, e.g. automatic actuation of no-gas-cutout.

2. Process specified under Claim 1, characterized in that in case of combined air valves-waste heat boxes and/or lean gas valves-waste heat boxes, the temperature in each waste heat box of combustion air and waste heat and/or lean gas and waste heat are measured only by one single temperature measurement point.

3. Process specified under Claim 1, characterized in that in case of coke ovens where the first three heating flues are heated, the temperature of rich gas is measured at the supply side in each rich gas flue.

4. Process specified under Claim 1, characterized in that flow metering instruments are installed in single feeders, preferrably between distribution mains and reversing cocks, to monitor the rich gas and/or lean gas reversing cocks with the objective to determine whether or not gas flows.

5. Process to monitor said reversing devices installed on coke oven batteries, characterized in that the fluid pressure in said feed mains to hydraulic cylinders by which each reversing linkage is moved, are measured, centrally registered, compared with the design values reflecting the position of the reversing device and, in case of nonpermissible deviations from the design value, signals are automatically triggered to take the required safety action.

6. Process in conformity with the claims raised hereinabove, characterized in that a failure report is automatically triggered in case that a measuring point fails to work.

## Revendications

1. Procédé pour la surveillance des dispositifs d'inversion de batteries de fours à coke, caractérisé par le fait que les températures et/ou les vitesses d'écoulement des fluides entrant dans chaque four de cokéfaction d'une batterie ou en sortant, à savoir l'air comburant, le gaz et les fumées, sont mesurées, enregistrées centralement, comparées avec les valeurs de consigne correspondant à la position du dispositif d'inversion et qu'en cas d'écarts inadmissibles des valeurs de consigne, des signaux sont automatiquement donnés pour que soit prises les mesures de sécurité necessaires et que, par exemple, le dispositif de sécurité contre le manque de gaz intervienne automatiquement.

2. Procédé d'après la revendication 1, caractérisé par le fait que, dans les boîtes combinées air/fumées ou bien gaz pauvre/fumées, la température de l'air comburant et des fumées ou bien du gaz pauvre et des fumées dans chaque boîte est mesurée à partir d'un seul point de mesure.

3. Procédé selon la revendication 1, caractérisé par le fait que, dans les fours à coke à introduction latérale du gaz riche, la température de ce gaz est mesurée du côté d'introduction dans chaque canal du gaz riche.

4. Procédé d'après la revendication 1, caractérisé par le fait que, pour la surveillance des robinets d'inversion du gaz riche et/ou du gaz pauvre sur les diverses introductions de ces gaz, on place - préférablement entre la tuyauterie de distribution et les robinets d'inversion - des dispositifs de mesure de l'écoulement, pour vérifier si le gaz passe ou ne passe pas.

5. Procédé pour la surveillance des dispositifs d'inversion des batteries de fours à coke, caractérisé par le fait que la pression du fluide hydraulique dans les tuyauteries d'alimentation des vérins hydrauliques de manoeuvre des divers tringlages de l'inversion est mesurée, enregistrée centralement et comparée avec les valeurs de consigne correspondant à la position du dispositif d'inversion et, qu'en cas d'écarts inadmissibles de la valeur de consigne, des signaux sont donnés automatiquement pour que les mesures de sécurité nécessaires soient prises.

6. Procédé d'après les revendications ci-dessus, caractérisé par le fait qu'en cas de défaillance d'un point de mesure, la perturbation est immédiatement signalée.

FIGUR 1

FIGUR 2

0 119 481